# EUROPÄISCHE PATENTSCHRIFT

(11) **EP 0 613 518 B1**
(45) Veröffentlichungstag und Bekanntmachung des Hinweises auf die Patenterteilung: **09.08.1995**
(21) Anmeldenummer: 92923273.4
(22) Anmeldetag: 17.11.1992
(51) Int. Cl.: F01K 23/10, F01K 17/02

(54) **KOMBINIERTE GAS-DAMPFTURBINENANLAGE ZUR ERZEUGUNG ELEKTRISCHER ENERGIE**
COMBINED GAS-STEAM TURBINE POWER STATION
INSTALLATION A TURBINES A GAZ ET A VAPEUR COMBINEES POUR LA PRODUCTION D'ENERGIE ELECTRIQUE

(30) Priorität: 19.11.1991 AT 2292/91
(43) Veröffentlichungstag der Anmeldung: 07.09.1994
(73) Patentinhaber: ELIN ENERGIEVERSORGUNG GESELLSCHAFT m.b.H., 1141 Wien (AT)
(72) Erfinder: JERICHA, Herbert, A-1080 Wien (AT)
(74) Vertreter: Krause, Peter
(86) Internationale Anmeldenummer: AT9200148
(87) Internationale Veröffentlichungsnummer: WO9310335

(56) Entgegenhaltungen:
- CH-A- 526 717
- DE-A- 1 526 896
- FR-A- 2 334 825
- GB-A- 2 004 362

## Beschreibung

Die Erfindung betrifft eine kombinierte Gas-Dampfturbinenanlage zur Erzeugung elektrischer Energie, mit einer Gasturbinenanlage, welche aus einem Kompressor, einer Turbine und einem Generator auf einer Welle und einer zwischen Kompressor und Turbine angeordneten Brennkammer besteht, und einer Dampfturbine die mit einem Generator verbunden ist.

Eine Kombination von Gas- und Dampfturbinenanlagen ist aufgrund der Verwertung des Wärmeinhaltes des Rauchgases durch die Dampfanlage die derzeit wirkungsvollste Wärmekraftmaschine mit einem recht guten thermischen Wirkungsgrad. Eine weitere Erhöhung des Wirkungsgrades ist nur durch Ausnutzung der Abdampfenthalpie der Dampfturbine möglich, wie z.B. das Dokument FR-A-2 334 825 es zeigt.

Die Aufgabe der Erfindung besteht nun darin eine neuartige Gas-Dampfturbinenanlage zu schaffen, bei der eine Kraft-Wärmekupplung integriert ist.

Die Aufgabe wird durch die Erfindung gelöst. Diese ist dadurch gekennzeichnet, daß die Verbrennungsgase der Gasturbine in einer Zusatzfeuerung erhitzt werden, und danach vor Austritt der Reihe nach durch mindestens zwei Verdampfer strömen, von denen der erste einen Überhitzer aufweist, und daß ein geschlossener Dampfkreislauf vorgesehen ist, in dem sich der Verdampfer mit dem Überhitzer dem die Dampfturbine folgt und ein Erhitzer eines vorzugsweise zur Erwärmung eines Fernwärmemediums vorgesehenen Zweikreiserhitzers befinden, und daß der zweite Erhitzer des Zweikreiserhitzers in einem geschlossenen Wärmepumpenkreislauf angeordnet ist, in welchem sich der zweite Verdampfer, ein von einem Motor angetriebener Dampfkompressor und ein Ventil befinden, und daß das Fernwärmemedium zuerst den Erhitzer im Wärmepumpenkreislauf und danach jenen im Dampfkreislauf durchströmt. Durch die Erwärmung des Fernwärmemediums über den Dampfkreislauf und die Wärmepumpe wird ein Gesamtwirkungsgrad von über 80% erreicht. Weiters ist auch die Austrittstemperatur der Verbrennungsgase der Gasturbine von 90° sehr gering, wodurch eine hohe thermische Ausnutzung dieser Verbrennungsgase erfolgt.

Von Vorteil ist, daß das Brennmaterial für die Gasturbine und für die Zusatzfeuerung vorzugsweise Erdgas ist. Da das Erdgas relativ leicht von Schwefel gereinigt werden kann und einen hohen Wasserstoffgehalt hat, ergibt es bei der Verbrennung den geringsten CO₂-Ausstoß aller fossilen Brennstoffe.

Nach einer Weiterbildung der Erfindung ist zwischen dem Verdampfer mit Überhitzer und dem Verdampfer im Wärmepumpenkreislauf ein weiterer Verdampfer, durch den das Verbrennungsgas strömt, angeordnet, der parallel zum Verdampfer mit Überhitzer und der Dampfturbine liegt. Durch diesen weiteren Verdampfer werden die Verbrennungsgase der Gasturbine noch besser ausgenützt.

Nach einer Ausgestaltung der Erfindung sind im Dampfkreislauf zwei Förderpumpen vorgesehen, von denen eine nach dem Erhitzer und eine vor dem Verdampfer mit Überhitzer angeordnet ist. Diese Pumpen dienen zum Transport des Kondensats im Dampfkreislauf.

Ein weiterer Vorteil liegt darin, daß im Dampfkreislauf vor der Turbine ein Ventil vorgesehen ist. Dieses Ventil dient zur Sicherheit.

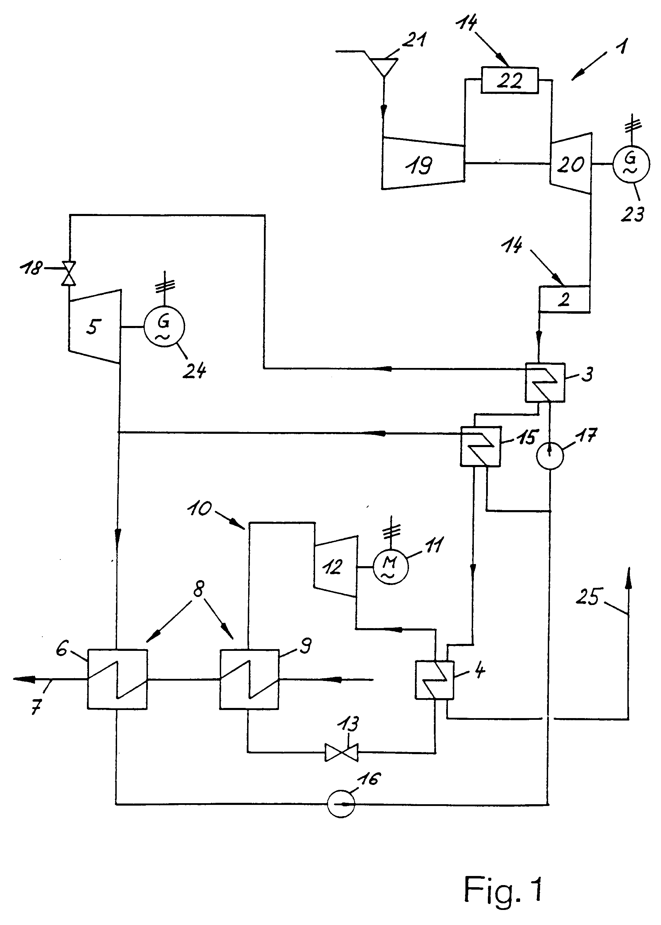

Die Erfindung wird nun an Hand der Zeichnung näher erläutert. Die Fig. 1 zeigt schematisch den Aufbau der erfindungsgemäßen Gas-Dampfturbinenanlage.

In Fig. 1 ist die Gasturbineneinheit 1 bestehend aus Kompressor 19 und Turbine 20 dargestellt. Im Kompressor 19 wird die über ein Filter 21 gereinigte Umgebungsluft verdichtet, sodann der Brennkammer 22 zugeführt, in der das als Brennstoff 14 zugeführte Erdgas 14 verbrannt wird. Das erhitzte Verbrennungsgas wird der Gasturbine 20, die mit einem Generator 23 gekuppelt ist, zugeführt und in dieser abgearbeitet. Das aus der Gasturbine 20 austretende Verbrennungsgas wird in einer Zusatzfeuerung 2, bei der ebenfalls Erdgas als Brennstoff 14 verwendet wird, erhitzt. Danach wird es einem Verdampfer 3 mit Überhitzer zugeführt, der sich im Dampfkreislauf befindet und den Hochdruckdampf für die Dampfturbine 5, die ebenfalls einen Generator 24 antreibt, aufbereitet. Zwischen diesem Verdampfer 3 und der Dampfturbine 5 ist noch ein Sicherheitsventil 18 eingebaut.
Das Verbrennungsgas durchströmt einen weiteren Verdampfer 15, der einen Dampf mittleren Druckes dem Abdampf der Dampfturbine 5 zuführt. Beide Verdampfer 3, 15 werden vom Kondensat im Dampfkreislauf versorgt, wobei vor dem Verdampfer 3 mit Überhitzer eine Förderpumpe 17 vorgesehen ist. Der Dampfkreislauf schließt sich über einen Erhitzer 6 eines Zweikreiserhitzers 8, der den Abdampf der Dampfturbine 5 ausnützt. Das Kondensat nach dem Erhitzer 6 im Dampfkreislauf gelangt über die Förderpumpe 16 an den Verdampfer 15 und über die Förderpumpe 17 an den Verdampfer 3.
Anschließend an den Verdampfer 15 durchströmt das Verbrennungsgas einen Verdampfer 4 im Wärmepumpenkreislauf 10 und entweicht danach mit nur einer Temperatur von 90°C über den Schornstein 25 ins Freie.
Der Wärmepumpenkreislauf 10 besteht aus dem schon erwähnten Verdampfer 4, dem ein von einem Motor 11 angetriebener Dampfkompressor 12 folgt. An diesem ist der zweite Erhitzer 9 des Zweikreiserhitzers 8 angeschlossen. Über ein Druckreduzierventil 13 ist der Kreislauf zum Verdampfer 4 geschlossen.
Durch die beiden Erhitzer 6, 9 fließt das flüssige Fernwärmemedium 7, wobei es zuerst im Erhitzer 9 von 100°C auf 105,7°C und im Erhitzer 6 weiter auf 140°C erwärmt wird.
Wie erkennbar, wird mit der erfindungsgemäßen Gas-Dampfturbinenanlage das Verbrennungsgas optimal ausgenützt und mit dem Wärmepumpenkreislauf 10 in Verbindung mit dem Dampfkreislauf auch ausreichend Energie zur Aufheizung eines Fernwärmemediums 7 bereitgestellt.

## Patentansprüche

1. Kombinierte Gas-Dampfturbinenanlage zur Erzeugung elektrischer Energie, mit einer Gasturbinenanlage, welche aus einem Kompressor, einer Turbine und einem Generator auf einer Welle und einer zwischen Kompressor und Turbine angeordneten Brennkammer besteht, und einer Dampfturbine die mit einem Generator verbunden ist, **dadurch gekennzeichnet,** daß die Verbrennungsgase der Gasturbine (1) in einer Zusatzfeuerung (2) erhitzt werden, und danach vor Austritt der Reihe nach durch mindestens zwei Verdampfer (3, 4) strömen, von denen der erste einen Überhitzer aufweist, und daß ein geschlossener Dampfkreislauf vorgesehen ist, in dem sich der Verdampfer (3) mit dem Überhitzer dem die Dampfturbine (5) folgt und ein Erhitzer (6) eines vorzugsweise zur Erwärmung eines Fernwärmemediums (7) vorgesehenen Zweikreiserhitzers (8) befinden, und daß der zweite Erhitzer (9) des Zweikreiserhitzers (8) in einem geschlossenen Wärmepumpenkreislauf (10) angeordnet ist, in welchem sich der zweite Verdampfer (4), ein von einem Motor (11) angetriebener Dampfkompressor (12) und ein Ventil (13) befinden, und daß das Fernwärmemedium (7) zuerst den Erhitzer (9) im Wärmepumpenkreislauf (10) und danach jenen im Dampfkreislauf durchströmt.

2. Kombinierte Gas-Dampfturbinenanlage nach Anspruch 1, **dadurch gekennzeichnet,** daß das Brennmaterial (14) für die Gasturbine (1) und für die Zusatzfeuerung (2) vorzugsweise Erdgas (14) ist.

3. Kombinierte Gas-Dampfturbinenanlage nach Anspruch 1 oder 2, **dadurch gekennzeichnet,** daß zwischen dem Verdampfer (3) mit Überhitzer und dem Verdampfer (4) im Wärmepumpenkreislauf (10) ein weiterer Verdampfer (15), durch den das Verbrennungsgas strömt, angeordnet ist, der parallel zum Verdampfer (3) mit Überhitzer und der Dampfturbine (5) liegt.

4. Kombinierte Gas-Dampfturbinenanlage nach mindestens einem der Ansprüche 1 bis 3, **dadurch gekennzeichnet,** daß im Dampfkreislauf zwei Förderpumpen (16, 17) vorgesehen sind, von denen eine nach dem Erhitzer (6) und eine vor dem Verdampfer (3) mit Überhitzer angeordnet ist.

5. Kombinierte Gas-Dampfturbinenanlage nach mindestens einem der Ansprüche 1 bis 3, **dadurch gekennzeichnet,** daß im Dampfkreislauf vor der Turbine (5) ein Ventil (18) vorgesehen ist.

## Claims

1. Combined gas-steam turbine power station for the production of electrical energy, including a gas turbine station consisting of a compressor, a turbine and a generator on one shaft and a combustion chamber situated between the compressor and the turbine, and a steam turbine which is connected to a generator, characterized in that the combustion gasses of the gas turbine (1) are heated in an additional burner (2) and thereafter, before exiting, flow sequentially through at least two vapourizers (3,4) whereof the first one comprises an overheater, and in that a closed steam circuit is provided in which are situated the vapourizer (3) with the overheater which is followed by the steam turbine (5) and a heater (6) of a double circuit heater (8) which is provided preferably for the heating of a remote heating medium, and in that the second heater (9) of the double circuit heater (8) is arranged in a closed heat pump circuit (10) in which are situated the second vapourizer (4) a steam compressor (12) which is driven by a motor (11) and a valve (13), and in that the remote heating medium (7) flows first through the heater (9) in the heat pump circuit (10) and thereafter the one in the vapour circuit.

2. The combined gas-steam turbine station of claim 1, characterized in that the combustion material (14) for the gas turbine (1) and for the additional burner (2) is preferably natural gas (14).

3. The combined gas-steam turbine station of claim 1 or 2, characterized in that a further vapourizer (15) is provided between the vapourizer (3) with the overheater and the vapourizer (4) in the heat pump circuit (10), through which vapourizer (15) flows the combustion gas, and which is provided in parallel to the vapourizer (3) with the overheater and the vapour turbine (5).

4. The combined gas-steam turbine station of at least one of claims 1-3, characterized in that two feed pumps (16,17) are provided in the vapour circuit, one of which being situated after the heater (6) and one before the vapourizer (3) with the overheater.

5. The combined gas-steam turbine station of at least one of claims 1-3, characterized in that a valve (18) is provided within the vapour circuit before the turbine (5).

## Revendications

1. Installation à turbines à gaz et à vapeur combinée, pour la production d'énergie électrique, avec une installation à turbine à gaz, qui est constituée d'un compresseur, d'une turbine et d'un générateur monté sur un arbre, et d'une chambre de combustion disposée entre le compresseur et la turbine, et d'une turbine à gaz, reliée à un générateur, caractérisée en ce que les gaz de combustion de la turbine à gaz (1) sont chauffés dans un foyer d'appoint (2) puis avant sortie passent, dans l'ordre, par au moins deux bouilleurs (3, 4) dont le premier présente un surchauffeur, et en ce qu'est prévu un circuit vapeur fermé, dans lequel se trouvent le bouilleur (3) avec le surchauffeur, puis la turbine (5), puis un réchauffeur (6) d'un réchauffeur à deux circuits (8), prévu de préférence pour réchauffer un fluide caloporteur (7), et en ce que le deuxième réchauffeur (9) du réchauffeur à deux circuits (8) est disposé dans un circuit de pompe à chaleur (10) fermé, dans lequel se trouvent le deuxième bouilleur (4), un compresseur à vapeur (12) entraîné par un moteur (11) et une soupape (13), et en ce que le fluide caloporteur (7) traverse d'abord le réchauffeur (9) situé dans le circuit de pompe à chaleur (10) puis celui situé dans le circuit vapeur.

2. Installation à turbines à vapeur et à gaz combinée selon la revendication 1, caractérisée en ce que le combustible (14) destiné à la turbine à gaz (1) et celui destiné au foyer d'appoint (2) est de préférence du gaz naturel (14).

3. Installation à turbines à vapeur et à gaz combinée selon la revendication 1 ou 2, caractérisée en ce qu'entre le bouilleur (3) équipé d'un surchauffeur et le bouilleur (4) monté dans le circuit de pompe à chaleur (10) est disposé un autre bouilleur (15), dans lequel passent les gaz de combustion et qui est monté parallèlement au bouilleur (3) équipé du surchauffeur et de la turbine à gaz (5).

4. Installation à turbines à vapeur et à gaz combinée selon au moins l'une des revendications 1 à 3, caractérisée en ce que dans le circuit vapeur sont prévues deux pompes de transfert (16, 17) dont l'une est disposée en aval du réchauffeur (6) et l'autre en amont du bouilleur (3) équipé du surchauffeur.

5. Installation à turbines à vapeur et à gaz combinée selon au moins l'une des revendications 1 à 3, caractérisée en ce qu'une soupape (18) est prévue dans le circuit vapeur, en amont de la turbine (5).
